(19) Europäisches Patentamt
European Patent Office
Office européen des brevets

(11) **EP 1 764 946 A1**

(12) **EUROPEAN PATENT APPLICATION**
published in accordance with Art. 158(3) EPC

(43) Date of publication:
21.03.2007 Bulletin 2007/12

(51) Int Cl.:
*H04L 9/08* (2006.01)    *H04Q 7/38* (2006.01)

(21) Application number: 05767411.1

(22) Date of filing: 29.07.2005

(86) International application number:
PCT/JP2005/013979

(87) International publication number:
WO 2006/013798 (09.02.2006 Gazette 2006/06)

(84) Designated Contracting States:
AT BE BG CH CY CZ DE DK EE ES FI FR GB GR HU IE IS IT LI LT LU LV MC NL PL PT RO SE SI SK TR

(30) Priority: 04.08.2004 JP 2004228661

(71) Applicant: MATSUSHITA ELECTRIC INDUSTRIAL CO., LTD.
Osaka 571-8501 (JP)

(72) Inventors:
• IMAI, Tomohiro
  Matsushita Electric Ind. Co.,Ltd.
  Chuo-ku, Osaka-shi
  Osaka 540-6319 (JP)

• YUDA, Yasuaki
  Matsushita Electric Ind. Co.,Ltd.
  Chuo-ku, Osaka-shi
  Osaka 540-6319 (JP)
• IMAMURA, Daichi
  Matsushita Electric Ind. Co.,Ltd.
  Chuo-ku, Osaka-shi
  Osaka 540-6319 (JP)

(74) Representative: Grünecker, Kinkeldey,
Stockmair & Schwanhäusser
Anwaltssozietät
Maximilianstrasse 58
80538 München (DE)

(54) **RADIO COMMUNICATION METHOD, RADIO COMMUNICATION SYSTEM, AND RADIO COMMUNICATION DEVICE**

(57)    There are disclosed a radio communication device and others capable of generating in a short time a secret key common to a base station and a mobile station in a radio communication system using the MIMO technique and starting the encrypted communication at an early stage. In this device, in ST545, when a channel coincidence judgment unit (105) and a channel coincidence judgment processing unit (205) respectively judge that the channel matrix generated by the base station completely coincides with the channel matrix generated by the mobile station or they do not coincide completely but they can coincide finally by error correction of the secret key or the like, according to the judgment result indicated in the channel coincidence judgment signal generated in ST540-2, ST545 is followed by ST550. On the other hand, when the channel matrix generated by the base station does not coincide completely with the channel matrix generated by the mobile station and they do not coincide finally even after error correction of the secret key, ST510 is again executed after ST545.

FIG.6

**Description**

Technical Field

The present invention relates to a wireless communication system using a Multiple Input Multiple Output (MIMO) technique for receiving wireless signals transmitted from a plurality of antenna elements at a plurality of antenna elements and carrying out wireless communication, and a wireless communication apparatus and wireless communication method used in this system.

Background Art

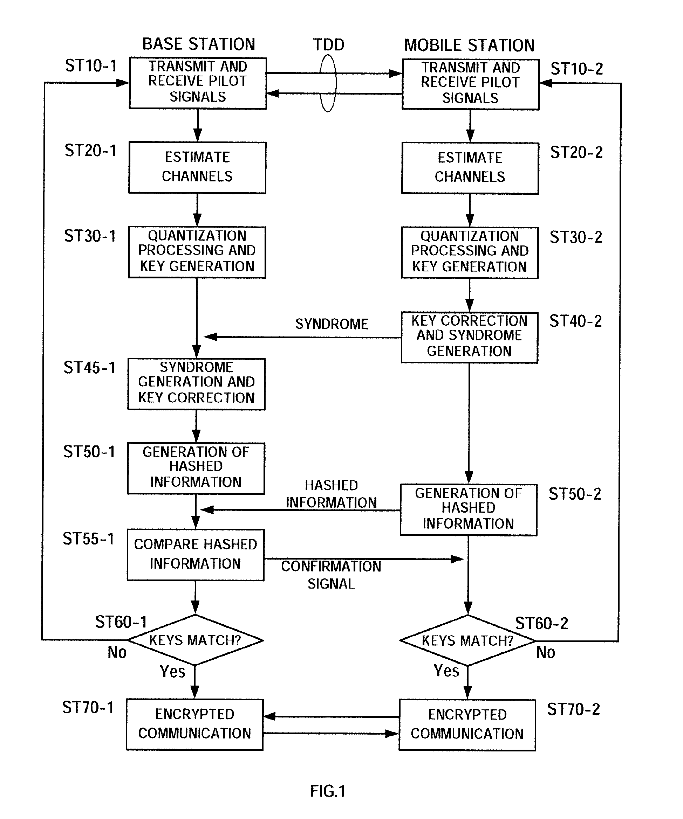

In recent years, a mobile communication technology has promptly spread with the development of the information society, because of its convenience. In the mobile communication, wireless signals are comparatively easy to be intercepted by eavesdropper, and therefore, when individual information and confidential information for business are transmitted and received in the mobile communication, it is inevitable to prevent eavesdropping of wireless signals.
As a countermeasure for eavesdropping in the mobile communication, an encryption technique is typically used. Specifically, the encryption technique is well known where secret keys are individually generated at wireless communication apparatuses on a transmission side and a receiving side using a channel state information (CSI) in the mobile communication system (for example, refer to non-patent document 1).
With the encryption technique disclosed in non-patent document 1, the wireless communication apparatuses on the transmission side and the receiving side individually estimate channel state information using the fact that channel fluctuation is random, that channel correlation before and after the fluctuation drastically decreases even if it is slight fluctuation of the transmission and receiving position, and that radio waves have typically reversibility. By confidentially sharing information obtained from the measurement result and generating the same secret key, encrypted communication is implemented between the wireless communication apparatuses.
The technique disclosed in non-patent document 1 will be described using FIG.1. FIG.1 shows a flow of signal processing up to the start of encrypted communication between a base station and a mobile station in a mobile communication system. In FIG.1, the same reference numerals are assigned for steps where the same signal processing is carried out between the base station and the mobile station. Further, in FIG. 1, a branch number "1" is assigned to steps of the base station, on the other hand, a branch number "2" is assigned to steps of the mobile station. In the following, the steps of the base station and steps of the mobile station will be comprehensively described with branch numbers being omitted for the steps other than the steps where separate description between the operations of the base station and the mobile station is necessary.
First, in step ST10, in order to share information obtained from a channel state information between the base station and the mobile station, pilot signals are alternately transmitted and received using a Time Division Duplex (TDD) scheme.
Next, in step ST20, the base station and the mobile station respectively estimate channel state information based on received pilot signals.
Next, in step ST30, the base station and the mobile station quantize channel estimation values such as amplitude and phase information of channels calculated in step ST20, generate quantized data made up of two values of 0 and 1, and generate secret keys by repeating or replacing the generated quantized data using a predetermined scheme.
Continuing on, in step ST40-2, the mobile station regards the bit pattern of the secret key generated by the mobile station as being block-encoded for convenience, calculates a syndrome by multiplying this secret key by a check matrix, and transmits the calculated syndrome to the base station.
Next, in step ST45-1, with regards to the secret key generated by the base station, the base station generates a syndrome as in step ST40-2, compares the syndrome generated by the base station and the syndrome transmitted from the mobile station, calculates a difference, and performs error correction on the secret key generated by the base station based on the calculated difference.
The base station and the mobile station alternately transmit and receive pilot signals using a TDD scheme, so that a difference will consequently occur between the channel estimation value calculated by the base station and the channel estimation value calculated by the mobile station due to time fluctuation of noise contained in the pilot signals. When this kind of difference between the channel estimation values spans across the determination boundary of quantization in step ST30, the problem occurs that the secret key generated by the base station and the secret key generated by the mobile station no longer match.
In step ST45-1, in order to restore the difference between the secret key generated by the base station and the secret key generated by the mobile station as far as possible, error correction is performed on the secret keys based on a difference of syndromes.
Continuing on, in step ST50, the base station and the mobile station respectively perform irreversible signal processing, such as hash processing, on the secret keys generated by the base station and the mobile station, and thereby generate hashed information. Further, in step ST50-2, the mobile station transmits the generated hashed information to the base station.

Next, in step ST55-1, the base station compares the hashed information generated by the base station and the hashed information transmitted from the mobile station, generates a confirmation signal indicating a comparison result, and transmits the generated confirmation signal to the mobile station.

Next, in step ST60, the base station and the mobile station respectively determine whether the secret key generated by the base station and the secret key generated by the mobile station match based on the confirmation signal generated in step ST55-1. In step ST60, when it is determined that the secret keys match, step ST70 is executed after step ST60. On the other hand, when it is determined that the secret keys do not match, step ST10 is executed again after step ST60.

Continuing on, in step ST70, the base station and the mobile station start encrypted communication using the secret keys generated by the base station and the mobile station.

Non-patent document 1: Technical Report of IEICE, RCS2002-173, "A Scheme of Secret Key Agreement Based on the Random Fluctuation of Channel Characteristics in Land Mobile Radio", by Motoki Horiike, Hideichi Sasaoka

Disclosure of Invention

Problems to be Solved by the Invention

However, with the technique disclosed in non-patent document 1, the data length of a secret key is several hundreds of bits, while the capability of error correction of the secret keys based on the difference of the syndromes at the base station is several bits. Therefore, even if errors of the secret keys are corrected based on the difference of the syndromes at the base station, it is predicted that there are many cases where the secret key generated by the base station and the secret key generated by the mobile station may not match.

When the secret key generated by the base station and the secret key generated by the mobile station do not match, the base station and the mobile station respectively perform processing again from transmission and reception of the pilot signals. Therefore, a series of signal processing such as generation of the syndromes, generation of hashed information, quantization processing of channel estimation values, generation of secret keys and error correction processing of the secret keys becomes meaningless, and a loss of time and calculations occurs.

Therefore, with the technique disclosed in non-patent document 1, it requires a lot of time to generate the common secret keys at the base station and the mobile station, so that it is difficult to promptly start encrypted communication.

It is therefore an obj ect of the present invention to provide a wireless communication apparatus and wireless communication method capable of generating common secret keys at a base station and a mobile station in a wireless communication system using a MIMO technique in a short period of time and promptly starting encrypted communication.

Means for Solving the Problem

The wireless communication method according to the present invention is a wireless communication method for carrying out wireless communication using a first wireless communication apparatus having a plurality of first antennas and a second wireless communication apparatus having a plurality of second antennas, the wireless communication method having: a first channel estimation step of calculating at the first wireless communication apparatus a first channel estimation value for a first MIMO channel formed between the plurality of first antennas and the plurality of second antennas; a second channel estimation step of calculating at the second wireless communication apparatus a second channel estimation value for a second MIMO channel formed between the plurality of second antennas and the plurality of first antennas; an information generation step of generating at the first wireless communication apparatus first channel information from the calculated first channel estimation value; a channel matching determination step of determining at the second wireless communication apparatus whether or not the second MIMO channel and the first MIMO channel match based on the calculated second channel estimation value and the first channel information; a first secret key generating step of generating at the first wireless communication apparatus a first secret key from the first channel estimation value only when it is determined in the channel matching determination step that the channels match; a second secret key generating step of generating at the first wireless communication apparatus a second secret key from the second channel estimation value only when it is determined in the channel matching determination step that the channels match.

Advantageous Effect of the Invention

According to the present invention, in a wireless communication system using the MIMO technique, a plurality of wireless communication apparatuses intending to start encrypted communication, respectively calculate MIMO channel estimation values, determine whether or not secret keys generated by the wireless communication apparatuses match before generating the secret keys based on the channel estimation values, actually generate secret keys only when a determination result indicates that the secret keys match, so that it is possible to reduce the time required for generating common secret keys, and promptly start encrypted communication.

Further, according to the present invention, in addition to the above-described advantage, in a wireless communication system using the MIMO technique, when a plurality of wireless communication apparatuses intending to start encrypted communication generate common secret keys, one of the wireless communication apparatuses transmits a correlation matrix of a MIMO channel to another wireless communication apparatus, so that, even if this correlation matrix is intercepted by eavesdropper, it is possible to maintain security of the generated secret keys.

Further, according to the present invention, in addition to the above-described advantages, when a plurality of wireless communication apparatuses intending to start encrypted communication in a wireless communication system using the MIMO technique generate common secret keys, error correction of a predetermined number of bits is implemented on the secret keys, so that even if correlation between the channel estimation values calculated by the wireless communication apparatuses is low, it is possible to make the generated secret keys match, and thereby promptly start encrypted communication.

Brief Description of the Drawings

FIG.1 shows a flowchart of signal processing up to a start of encrypted communication of the related art;

FIG.2 is a block diagram showing a configuration of a base station provided with the wireless communication apparatus according to Embodiment 1;

FIG.3 is a block diagram showing a configuration of a mobile station provided with the wireless communication apparatus according to Embodiment 1;

FIG.4 is a block diagram showing the details of the configuration of part of the wireless communication apparatus according to Embodiment 1;

FIG.5 shows an example of the correlation of channel correlation value $\rho$ for the number of bits where a secret key generated by the base station and a secret key generated by the mobile station do not match according to Embodiment 1;

FIG.6 is a flowchart illustrating the operation of the wireless communication system according to Embodiment 1;

FIG.7 is a block diagram showing a configuration of a base station provided with a wireless communication apparatus according to Embodiment 2;

FIG.8 is a block diagram showing a configuration of a mobile station provided with the wireless communication apparatus according to Embodiment 2;

FIG. 9A shows an example of the correlation of channel correlation value $\rho$ for the number of bits where the secret key generated by the base station and the secret key generated by the mobile station do not match according to Embodiment 2;

FIG.9B shows the relationship between channel correlation values and error correction capability shown in FIG.9A;

FIG.10 is a flowchart illustrating the operation of the wireless communication system according to Embodiment 2;

FIG.11 is a block diagram showing a configuration of a wireless communication apparatus applying the present invention;

FIG.12 illustrates the operation of the wireless communication system applying the present invention; and

FIG. 13 illustrates an outline of an MIMO channel.

Best Mode for Carrying Out the Invention

Embodiments of the present invention will be described in detail below with reference to the accompanying drawings. In each of the embodiments described below, a case will be described as an example where the base station and the mobile station intend to start encrypted communication in a mobile communication system of a TDD scheme using a MIMO technique.

(Embodiment 1)

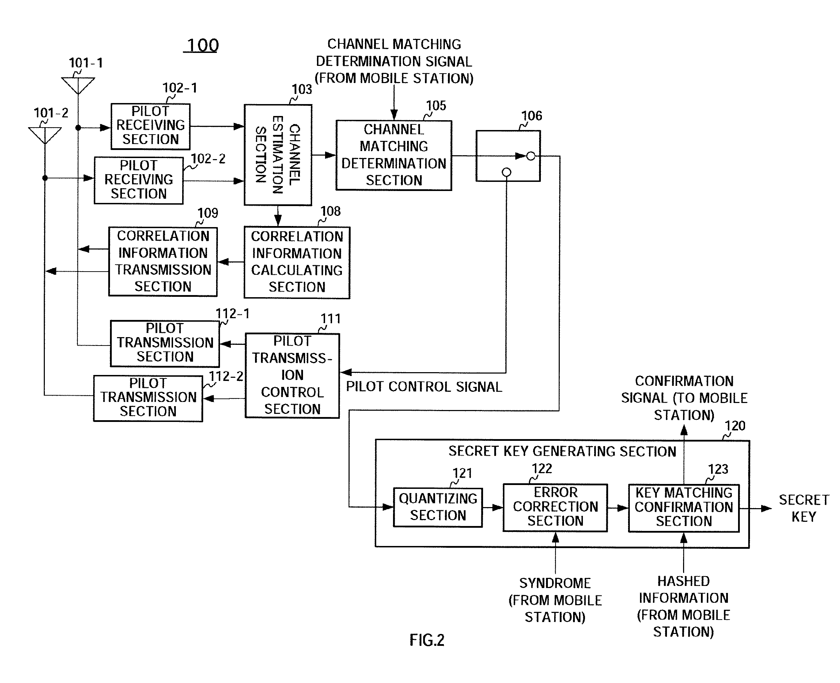

FIG.2 is a block diagram showing the configuration of the base station provided with wireless communication apparatus 100 according to Embodiment 1 of the present invention.

Wireless communication apparatus 100 has two antenna elements 101-1 and 101-2, two pilot receiving sections 102-1 and 102-2, channel estimation section 103, channel matching determination section 105, switch 106, correlation information calculating section 108, correlation information transmission section 109, pilot transmission control section 111, two pilot transmission sections 112-1 and 112-2, and secret key generating section 120. Further, secret key generating section 120 has quantizing section 121, error correction section 122 and key matching confirmation section 123.

Antenna elements 101-1 and 101-2 respectively acquire wireless signals transmitted from the mobile station which is a communicating party and input the received signals to pilot receiving sections 102-1 and 102-2.

Pilot receiving sections 102-1 and 102-2 respectively have band pass filters, analog/digital converters and low noise amplifiers, extract pilot signals from the received signals inputted from antenna elements 101-1 and 101-2, carry out known received signal processing on the extracted pilot signals, and input the pilot signals after this processing to channel estimation section 103.

Channel estimation section 103 calculates channel estimation values of MIMO channels based on the pilot signals inputted from pilot receiving sections 102-1 and 102-2, generates a channel matrix of MIMO channels from calculated estimation values, and inputs the generated channel matrix to channel matching determination section 105 and correlation information calculating section 108.

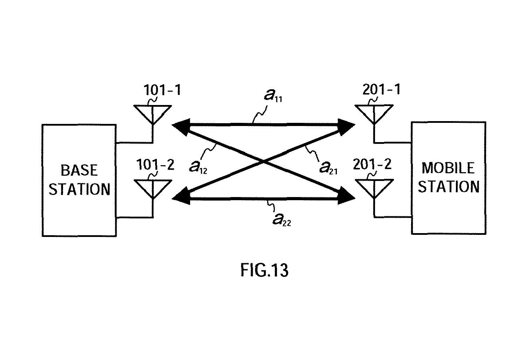

A channel estimation value of MIMO channels is a collective term of channel estimation values for the four channels ($a_{11}$, $a_{12}$, $a_{21}$ and $a_{22}$ in FIG. 13) formed between the channels of MIMO channels, that is, antenna elements 201-1 and 201-2, and antenna elements 101-1 and 101-2. Further, the channel matrix of MIMO channels will be described later.

Channel matching determination section 105 controls switch 106 so as to input a channel matrix of MIMO channels inputted from channel estimation section 103 to secret key generating section 120 according to a determination result which is contained in a signal received by antenna element 101 and indicated in a channel matching determination signal inputted from a control section (not shown), when the determination result indicates that the secret keys match. On the other hand, when the determination result indicates that the secret keys do not match, switch 106 is controlled so as to input a pilot control signal to pilot transmission control section 111.

Switch 106 inputs a channel matrix to secret key generating section 120 and inputs a pilot control signal to pilot transmission control section 111 in accordance with a control instruction of channel matching determination section 105.

Correlation information calculating section 108 generates a correlation matrix of MIMO channels from the channel matrix inputted from channel estimation section 103 and inputs the generated correlation matrix to correlation information transmission section 109. The aspect of signal processing for generating a channel correlation matrix from the channel matrix of MIMO channels will be described in the following.

Correlation information transmission section 109 radio transmits the correlation matrix of MIMO channels inputted from correlation information calculating section 108 to the mobile station via antenna elements 101-1 and 101-2.

When the pilot control signal is inputted from switch 106, pilot transmission control section 111 immediately generates pilot signals, and inputs the generated pilot signals to pilot transmission sections 112-1 and 112-2.

Pilot transmission sections 112-1 and 112-2 respectively have band-pass filters, digital/analog converters, and low noise amplifiers, carry out known transmission signal processing on the pilot signals inputted from pilot transmission control section 111, and radio transmit the pilot signals after this processing to the mobile station via antenna elements 101-1 and 101-2.

When the channel matrix is inputted from switch 106, secret key generating section 120 generates a secret key by carrying out signal processing described later on the channel matrix, and inputs the generated secret key to a control section (not shown) . Specifically, this is as follows.

Quantizing section 121 quantizes the channel matrix inputted from switch 106 so as to generate quantized data, generates a secret key by appropriately selecting, connecting or recombining this quantized data using a predetermined scheme, and inputs the generated secret key to error correction section 122.

Error correction section 122 regards the bit pattern of the secret key inputted from quantizing section 121 as being block-encoded for convenience, calculates a syndrome by multiplying this secret key by a predetermined check matrix. Further, error correction section 122 compares the syndrome which is calculated by the mobile station, inputted from a control section (not shown), and contained in a signal received by antenna element 101 and the syndrome calculated by the base station, calculates a difference of these syndromes, and performs error correction on the secret key inputted from quantizing section 121 based on the calculated difference. Error correction section 122 inputs the secret key after error correction processing to key matching confirmation section 123.

Key matching confirmation section 123 then generateshashedinformation by carrying out irreversible signal processing, for example, hash processing on the secret key inputted from error correction section 122. Further, key matching confirmation section 123 compares hashed information which is generated by the mobile station, inputted from a control section (not shown), and contained in the signal received by antenna element 101, and hashed information generated by the base station, inputs a confirmation signal confirming whether a difference exists between the hashed information to a control section (not shown), and radio transmits the confirmation signal to the mobile station via antenna element 101. Key matching confirmation section 123 inputs the secret key to a control section (not shown) after confirming that there is no difference between the hashed information.

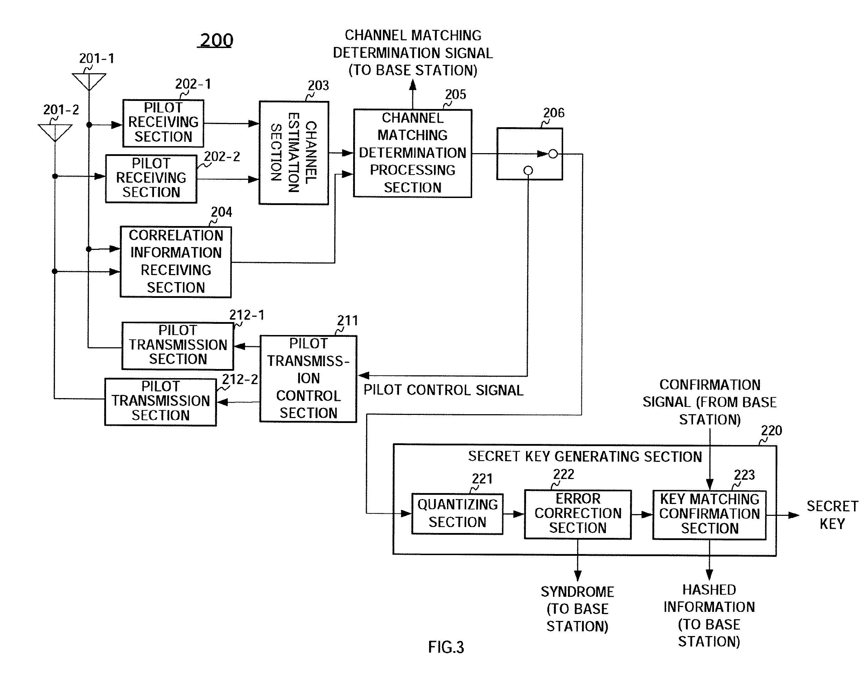

FIG. 3 is a block diagram showing the configuration of the mobile station apparatus provided with wireless communication apparatus 200 according to this embodiment.

Wireless communication apparatus 200 has two antenna elements 201-1 and 201-2, two pilot receiving sections 202-1 and 202-2, channel estimation section 203, correlation information receiving section 204, channel matching determination processing section 205, switch 206, pilot transmission control section 211, two pilot transmission sections 212-1 and 212-2, and secret key generating section 220. Further, secret key generating section 220 has quantizing section 221, error correction section 222 and key matching confirmation section 223.

Antenna elements 201-1 and 201-2 acquire wireless signals transmitted from the base station which is a communicating party and input the received signals to pilot receiving sections 202-1 and 202-2.

Pilot receiving sections 202-1 and 202-2 respectively have band pass filters, analog/digital converters and low noise amplifiers, extract pilot signals from received signals inputted from antenna elements 201-1 and 201-2, carry out known received signal processing on the extracted pilot signals, and input the pilot signals after this processing to channel estimation section 203.

Channel estimation section 203 calculates channel estimation values of MIMO channels based on the pilot signals inputted from pilot receiving sections 202-1 and 202-2, generates a channel matrix of MIMO channels from the calculated channel estimation values, and inputs the generated channel matrix to channel matching determination processing section 205.

Correlation information receiving section 204 has a band-pass filter, digital/analog converter, and low noise amplifier, extracts a correlation matrix of MIMO channels which is generated at the base station and contained in a signal received by antenna elements 201-1 and 201-2, and inputs the extracted correlation matrix of MIMO channels to channel matching determination processing section 205.

Channel matching determination processing section 205 first confirms whether channel matrix and the channel matrix of MIMO channels generated by the base station that is a source of this correlation matrix completely match based on the channel matrix of MIMO channels inputted from channel estimation section 203 and the channel matrix of MIMO channels which is generated by the base station and inputted from correlation information receiving section 204.

When this channel matrix and the channel matrix generated by this base station do not completely match, channel matching determination processing section 205 carries out signal processing described later, and determines whether or not the mismatch can be resolved by performing error correction on the secret key. Channel matching determination processing section 205 inputs a channel matching determination signal including the result of confirming whether this channel matrix and the channel matrix generated by this base station match, and a determination result indicating whether or not mismatch can be resolved when the confirmation result indicates that channel matrices do not match, to a control section (not shown), and radio transmits this channel matching determination signal to the base station via antenna element 201.

Further, channel matching determination processing section 205 controls switch 206 so that the channel matrix inputted from channel estimation section 203 is inputted to secret key generating section 220 when the channel matching determination signal indicates that the channel matrix inputted from channel estimation section 203 and the channel matrix generated by the base station completely match, or that, even if mismatch, this can be resolved. On the other hand, when the channel matching determination signal indicates that the channel matrix inputted from channel estimation section 203 and the channel matrix generated by the base station do not match, and the mismatch cannot be resolved, channel matching determination processing section 205 controls switch 206 so that the pilot control signal is inputted to pilot transmission control section 211.

Switch 206 inputs a channel matrix to secret key generating section 220 and inputs a pilot control signal to pilot transmission control section 211 in accordance with a control instruction of channel matching determination processing section 205.

When the pilot control signal is inputted from switch 206, pilot transmission control section 211 immediately generates pilot signals, and inputs the generated pilot signals to pilot transmission sections 212-1 and 212-2.

Pilot transmission sections 212-1 and 212-2 respectively have band-pass filters, digital/analog converters, and low noise amplifiers, carry out known transmission signal processing on the pilot signals inputted from pilot transmission control section 211, and radio transmit the pilot signals after this processing to the base station via antenna elements 201-1 and 201-2.

When the channel matrix is inputted from switch 206, secret key generating section 220 generates a secret key by carrying out signal processing described later on the channel matrix, and inputs the generated secret key to a control section (not shown). Specifically, this is as follows.

Quantizing section 221 quantizes the channel matrix inputted from switch 206 so as to generate quantized data, generates a secret key by appropriately selecting, connecting or recombining the quantized data using a predetermined scheme, and inputs the generated secret key to error correction section 222.

Error correction section 222 regards the bit pattern of the secret key inputted from quantizing section 221 as being block-encoded for convenience, calculates a syndrome by multiplying this secret key by a predetermined check matrix. Error correction section 222 inputs the calculated syndrome to a control section (not shown) and radio transmits the syndrome to the base station via antenna element 201. Further, error correction section 222 inputs the secret key to key matching confirmation section 223 after calculating the syndrome, without performing error correction on the secret key.

key matching confirmation section 223 then generates hashed information by carrying out irreversible signal processing, for example, hash processing on the secret key inputted from error correction section 222. Key matching confirmation section 223 inputs the generated hashed information to a control section (not shown) and radio transmits the hashed information to the base station via antenna element 201.

Further, key matching confirmation section 223, holds the secret key used in generation of this hashed information until a confirmation signal which is a response from the base station for the radio transmitted hashed information is inputted from a control section (not shown). Key matching confirmation section 223 then inputs the secret key to the control section (not shown) after confirming that the confirmation signal inputted from the control section (not shown) indicates that there is no difference between the hashed information.

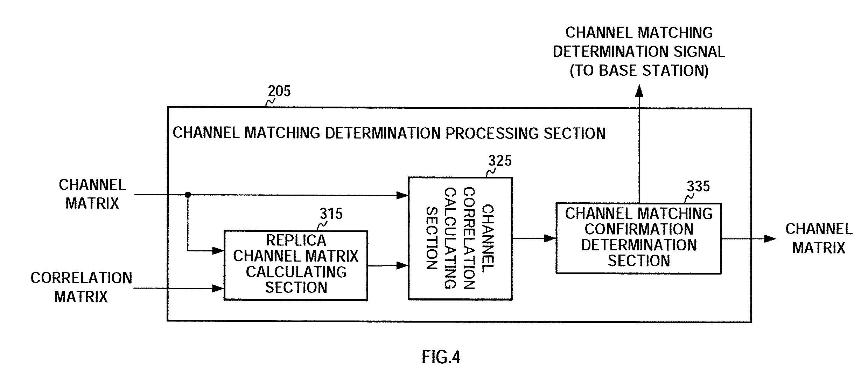

FIG.4 is a block diagram showing a detailed configuration of channel matching determination processing section 205. As shown in FIG.4, channel matching determination processing section 205 has replica channel matrix calculating section 315, channel correlation calculating section 325 and channel matching confirmation determination section 335.

Replica channel matrix calculating section 315 generates a replica channel matrix from the channel matrix inputted from channel estimation section 203 and the correlation matrix which is generated by the base station and inputted from correlation information receiving section 204, and inputs the generated replica channel matrix to channel correlation calculating section 325.

Here, the replica channel matrix generated at replica channel matrix calculating section 315 will be described. A channel matrix of MIMO channels generated by the base station is assumed to be "$A_{BS}$", and a channel matrix of MIMO channels generated by the mobile station is assumed to be "$A_{MS}$". Further, as shown in FIG.13, when a channel formed between antenna element 101-1 of the base station and antenna element 201-1 of the mobile station is "$a_{11}$", a channel formed between antenna element 101-1 of the base station and antenna element 201-2 of the mobile station is "$a_{12}$", a channel formed between antenna element 101-2 of the base station and antenna element 201-1 of the mobile station is "$a_{21}$", and a channel formed between antenna element 101-2 of the base station and antenna element 201-2 of the mobile station is "$a_{22}$", $A_{BS}$ and $A_{MS}$ can be respectively expressed by the following equation.

[Equation 1]

$$A_{BS} = \begin{bmatrix} a_{11} & a_{12} \\ a_{21} & a_{22} \end{bmatrix} \quad , \quad A_{MS} = \begin{bmatrix} a'_{11} & a'_{12} \\ a'_{21} & a'_{22} \end{bmatrix}$$

A correlation matrix of MIMO channels $A_{BS}A^H_{BS}$ generated by the base station inputted from correlation information receiving section 204 to replica channel matrix calculating section 315 can then be expressed by the following equation. Superscript suffix "$^H$" of "$A^H_{BS}$" indicates a Hermitian conjugate.

[Equation 2]

$$A_{BS}A_{BS}^{H} = \begin{bmatrix} a_{11} & a_{12} \\ a_{21} & a_{22} \end{bmatrix} \begin{bmatrix} a_{11}^{*} & a_{21}^{*} \\ a_{12}^{*} & a_{22}^{*} \end{bmatrix} = \begin{bmatrix} |a_{11}|^{2} + |a_{12}|^{2} & a_{11}a_{21}^{*} + a_{12}a_{22}^{*} \\ a_{11}^{*}a_{21} + a_{12}^{*}a_{22} & |a_{21}|^{2} + |a_{22}|^{2} \end{bmatrix}$$

In this embodiment, this correlation matrix $A_{BS}A^{H}_{BS}$ is radio transmitted from the base station to the mobile station, but even if this correlation matrix $A_{BS}A^{H}_{BS}$ is intercepted by eavesdropper, the diagonal component of the correlation matrix is a real value, so that the intercepting eavesdropper cannot specify the original channel matrix of MIMO channels. Therefore, in this embodiment, the security of the secret key may not be compromised by radio transmitting correlation matrix $A_{BS}A^{H}_{BS}$.

Replica channel matrix calculating section 315 then generates a replica channel matrix shown in the following equation by multiplying channel matrix $A_{MS}$ from channel estimation section 203 by this correlation matrix $A_{BS}A^{H}_{BS}$ and inputs the generated replica channel matrix to channel correlation calculating section 325.

[Equation 3]

$$\widetilde{A} = (A_{BS}A_{BS}^{H})(A_{MS}^{H})^{-1}$$

Channel correlation calculating section 325 then calculates channel correlation value $\rho$ between the replica channel matrix inputted from replica channel matrix calculating section 315 and the channel matrix inputted from channel estimation section 203 and inputs the calculated channel correlation value $\rho$ to channel matching confirmation determination section 335.

Here, if it is assumed that the channel matrix inputted from channel estimation section 203 and the channel matrix generated by the base station completely match, $A_{BS} = A_{MS}$, and this replica channel matrix is equal to $A_{MS}$. Channel correlation calculating section 325 can then confirm whether or not the channel matrix inputted from channel estimation section 203 and the channel matrix generated by the base station completely match by comparing this replica channel matrix and $A_{MS}$.

Further, a secret key is generated by quantizing the frequency characteristic of the channel, amplitude information and phase information of a delay profile. Therefore, even if the channel matrix generated by the base station and the channel matrix generated by the mobile station do not completely match, if the channels that are elements of the channel matrices fluctuate in the same manner, the secret key generated by the base station and the secret key generated by the mobile station may finally match through error correction processing after generating the secret keys.

In order to determine whether or not the behavior of the channels between the base station and the mobile station is similar, channel correlation value $\rho$ shown in the following equation is used. Here, E [ ] indicates ensemble average, $a_{ij}$ indicates an $A_{BS}$ element, and $a'_{ij}$ indicates an $A_{MS}$ element.

[Equation 4]

$$\rho = \frac{E[a_{ij}^{*}a_{ij}']}{\sqrt{E[|a_{ij}|^{2}]}\sqrt{E[|a_{ij}'|^{2}]}}$$

Channel matching confirmation determination section 335 determines whether or not the channel matrix generated by the mobile station and the channel matrix generated by the base station completely match, or even if the channel matrices do not completely match, whether the channel matrices finally match through error correction, based on channel correlation value ρ inputted from channel correlation calculating section 325, inputs the determination result to a control section (not shown) as a channel matching determination signal, and radio transmits the channel matching determination signal to the base station via antenna element 201.

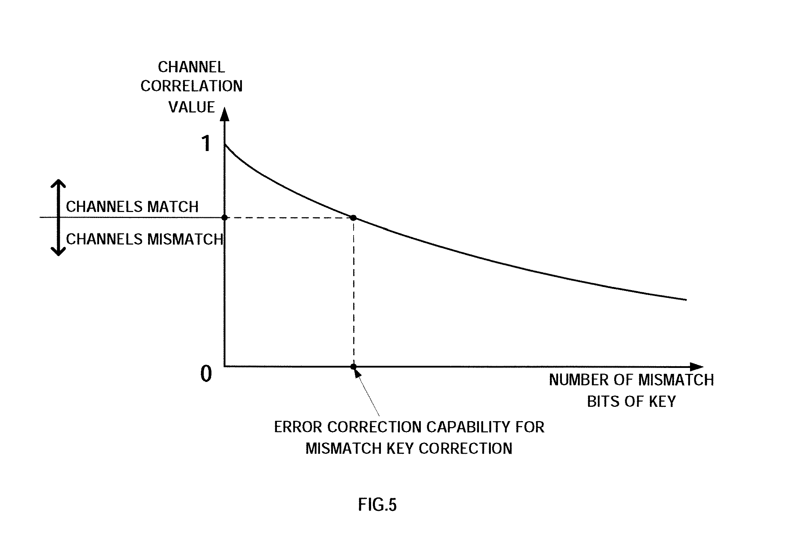

Here, an aspect of determination based on channel correlation value ρ by channel matching confirmation determination section 335 will be described in detail using FIG.5. FIG.5 shows an example of the correlation of channel correlation value ρ with respect to the number of bits where the secret key generated by the base station and the secret key generated by the mobile station do not match. As is clear from FIG.5, channel correlation value ρ takes 1 as a maximum, and becomes smaller in accordance with an increase of the number of bits where the secret key generated by the base station and the secret key generated by the mobile station do not match. In other words, higher channel correlation value ρ is required in accordance with a decrease of permitted error correction capability, that is, a decrease of an error rate (a decrease of the number of mismatch bits in FIG.5), in the mobile communication system. On the other hand, the requirement for channel correlation value ρ is also alleviated in accordance with an increase of permitted error correction capability (in accordance with an increase of the number of mismatch bits in FIG.5).

Therefore, as shown in FIG. 5, for example, when permitted error correction capability is fixed in the mobile communication system, and channel correlation value ρ corresponding to this error correction capability is used as a threshold value, channel matching confirmation determination section 335 is capable of determining that the secret key generated by the base station and the secret key generated by the mobile station may finally match, if channel correlation value ρ calculated by channel correlation calculating section 325 is greater than or equal to this threshold value. On the other hand, if channel correlation value ρ calculated by channel correlation calculating section 325 is less than this threshold value, channel matching confirmation determination section 335 is capable of determining that the secret key generated by the base station and the secret key generated by the mobile station do not finally match. If channel correlation value ρ = 1, the number of bits where the secret key generated by the base station and the secret key generated by the mobile station do not match is zero, and therefore the channel matrix generated by the base station and the channel matrix generated by the mobile station completely match.

Next, the operation of a wireless communication system having a base station provided with wireless communication apparatus 100 and a mobile station provided with wireless communication apparatus 200.

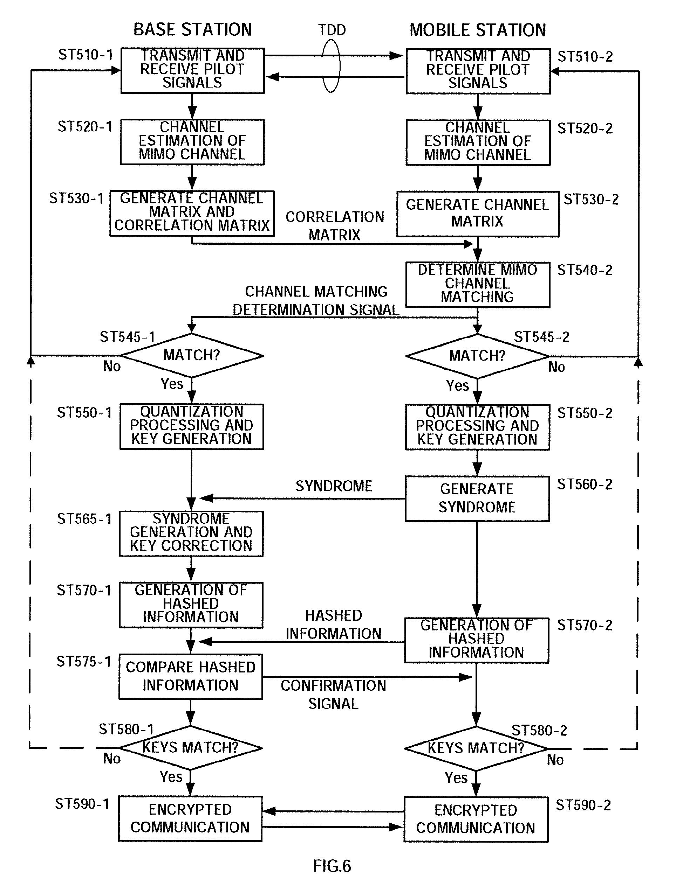

FIG.6 is a flowchart showing steps up to the start of encrypted communication between the base station and the mobile station in the wireless communication system having a base station provided with wireless communication apparatus 100 and a mobile station provided with wireless communication apparatus 200. Further, in FIG.6, a branch number "1" is assigned to steps of the base station, and similarly, a branch number "2" is assigned to steps of the mobile station. In the following, steps where the operations of the base station and mobile station are the same will be comprehensively described without assigning branch numbers in order to avoid duplication.

First, in step ST510, pilot signals are alternately transmitted and received using a TDD scheme in order that the base station and the mobile station share information obtained from the channel state information.

Continuing on, in step ST520, channel estimation section 103 of the base station and channel estimation section 203 of the mobile station respectively carry out channel estimation of MIMO channels.

Continuing on, in step ST530-1, channel estimation section 103 of the base station generates a channel matrix of MIMO channels from channel estimation values of MIMO channels calculated in step ST520-1, generates a correlation matrix of MIMO channels from the channel matrix generated by correlation information calculating section 108 of the base station, and radio transmits the generated correlation matrix to the mobile station via antenna element 101.

Continuing on, in step ST530-2, channel estimation section 203 of the mobile station generates a channel matrix of MIMO channels from channel estimation values of MIMO channels calculated in step ST520-2.

Continuing on, in step ST540-2, channel matching determination processing section 205 of the mobile station confirms whether or not the channel matrix generated by the base station and the channel matrix generated by channel estimation section 203 match based on the correlation matrix generated by the base station in step ST530-1 and the channel matrix generated by channel estimation section 203 in step ST530-2, or determines whether or not the channel matrices finally match through error correction of the secret key even when the channel matrices do not completely match, and radio transmits a channel matching determination signal indicating the determination result to the base station via antenna element 201.

Continuing on, in step ST545, when channel matching determination section 105 of the base station and channel matching determination processing section 205 of the mobile station confirm that the channel matrix generated by the base station and the channel matrix generated by the mobile station completely match according to the determination result indicated in the channel matching determination signal generated in step ST540-2, or determines that the channel matrices may finally match through error correction of the secret key even when the channel matrices do not completely match, step ST550 is executed after step ST545. On the other hand, when it is determined that the channel matrix generated by the base station and the channel matrix generated by the mobile station do not completely match and the channel matrices may not finally match through error correction of the secret key, step ST510 is executed again after step ST545.

Next, in step ST550, quantizing section 121 of the base station and quantizing section 221 of the mobile station quantize amplitude and phase information of MIMO channels calculated in step ST520, generates quantized data made up of two values of 0 and 1, and generates a secret key by repeating or replacing the generated quantized data using a predetermined scheme.

Continuing on, in step ST560-2, error correction section 222 of the mobile station regards the bit pattern of the secret key generated by quantizing section 221 as being block-encoded for convenience, calculates a syndrome by multiplying this secret key by a check matrix, and radio transmits the calculated syndrome to the base station.

Next, in step ST565-1, with regards to the secret key generated by quantizing section 121, error correction section 122 of the base station generates a syndrome as in step ST560-2, compares the syndrome generated by the base station and the syndrome transmitted from the mobile station, calculates a difference, and performs error correction on the secret key generated by quantizing section 121 based on the calculated difference.

Continuing on, in step ST570, key matching confirmation section 123 of the base station and key matching confirmation section 223 of the mobile station respectively carry out irreversible signal processing, more specifically, hash processing on the secret keys generated by the base station and the mobile station and generate hashed information. Further, in step ST570-2, key matching confirmation section 223 of the mobile station transmits the generated hashed information to the base station.

Next, in step ST575-1, key matching confirmation section 123 of the base station compares the hashed information generated by key matching confirmation section 123 and the hashed information transmitted from the mobile station, generates a confirmation signal indicating the comparison result, and radio transmits the generated confirmation signal to the mobile station.

Continuing on, in step ST580, key matching confirmation section 123 of the base station and key matching confirmation section 223 of the mobile station respectively determine whether or not the secret key generated by the base station and the secret key generated by the mobile station match based on the confirmation signal generated by key matching confirmation section 123 in step ST575-1.

In step ST580, when it is determined that the secret keys match, step ST590 is executed after step ST580. On the other hand, when it is determined that the secret keys do not match, step ST510 is executed again after step ST580.

In order to execute step ST580, as described above, it is necessary to confirm that the channel matrix generated by the base station and the channel matrix generated by the mobile station completely match, or determine that the channel matrices may finally match through error correction of the secret key in step ST545, and therefore it is extremely rare to be determined that the secret keys do not match in step ST580.

Continuing on, in step ST590, the base station and the mobile station respectively start encrypted communication using the secret keys generated by the base station and the mobile station.

In this way, according to this embodiment, in a wireless communication system using a MIMO technique, a base station provided with wireless communication apparatus 100 and a mobile station provided with wireless communication apparatus 200 intending to start encrypted communication, respectively calculate channel estimation values of MIMO channels, and, before generating secret keys based on the channel estimation values, determine whether or not the secret keys to be generated by wireless communication apparatuses 100 and 200 may finally match, and generate secret keys only when the determination result indicates that the secret keys may match, so that it is possible to reduce the time required for generating common secret keys and promptly start encrypted communication.

Further, according to this embodiment, in a wireless communication system using a MIMO technique, when the base station provided with wireless communication apparatus 100 and the mobile station provided with wireless communication apparatus 200 intending to start encrypted communication generate common secret keys, a correlation matrix of MIMO channels is transmitted from wireless communication apparatus 100 to wireless communication apparatus 200, so that it is possible to maintain security of the secret keys generated after even if this correlation matrix is intercepted by eavesdropper.

In this embodiment, determination of channel matching is carried out using the correlation matrix of MIMO channels, but it is also possible to use eigenvectors or eigenvalues obtained from a result of carrying out eigenvalue decomposition on the correlation matrix of MIMO channels.

Further, in this embodiment, the case has been described where wireless communication apparatus 100 and wireless communication apparatus 200 are respectively provided with two antenna elements, but the present invention is by no means limited to this, and, for example, the number of antenna elements that are provided with wireless communication apparatus 100 and wireless communication apparatus 200 may be three or more at each station, or two or more and different between the stations .

(Embodiment 2)

In this embodiment, the base station and the mobile station respectively perform error correction on the generated secret keys and control the error correction capability based on channel correlation value p. In the following, only points differing from Embodiment 1 will be described to avoid duplication.

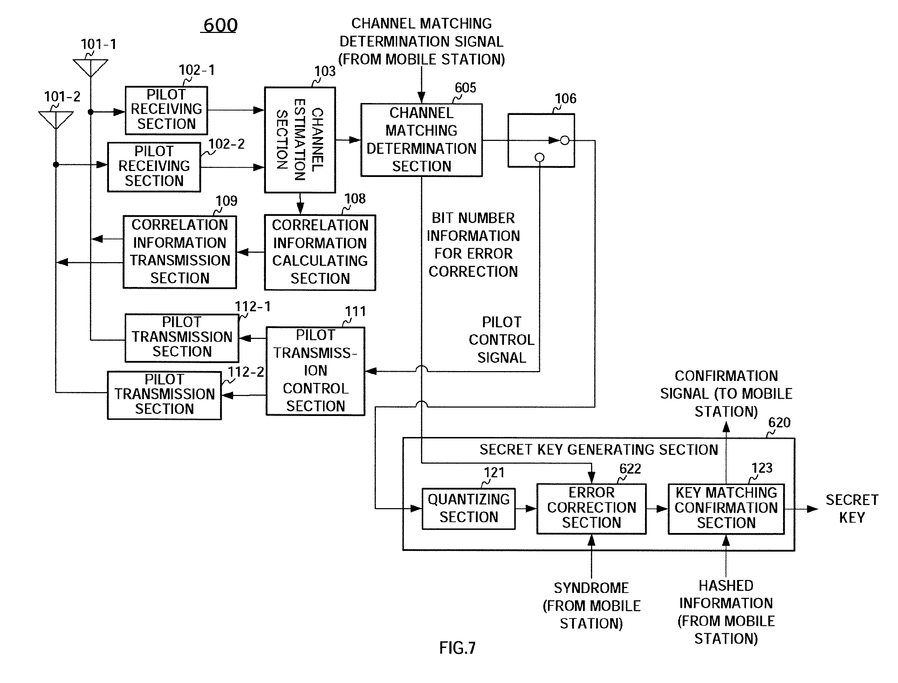

FIG.7 is a block diagram showing a configuration of the base station provided with wireless communication apparatus 600 according to this embodiment. Wireless communication apparatus 600 has channel matching determination section 605 in place of channel matching determination section 105 of wireless communication apparatus 100 according to Embodiment 1, and secret key generating section 620 in place of secret key generating section 120. Secret key generating section 620 has error correction section 622 in place of error correction section 122 at secret key generating section 120.

Channel matching determination section 605 decides the number of bits of redundant data in the secret key generated by quantizing section 121 according to the magnitude of channel correlation value $\rho$ which is contained in the signal received by antenna element 101 and indicated by a channel matching determination signal inputted from a control section (not shown), and reports the decided bit number information for the redundant data to error correction section 622.

Error correction section 622 carries out error correction assuming that redundant data of the number of bits reported from channel matching determination section 605 is contained in the secret key inputted from quantizing section 121 and inputs the secret key after error correction to key matching confirmation section 123.

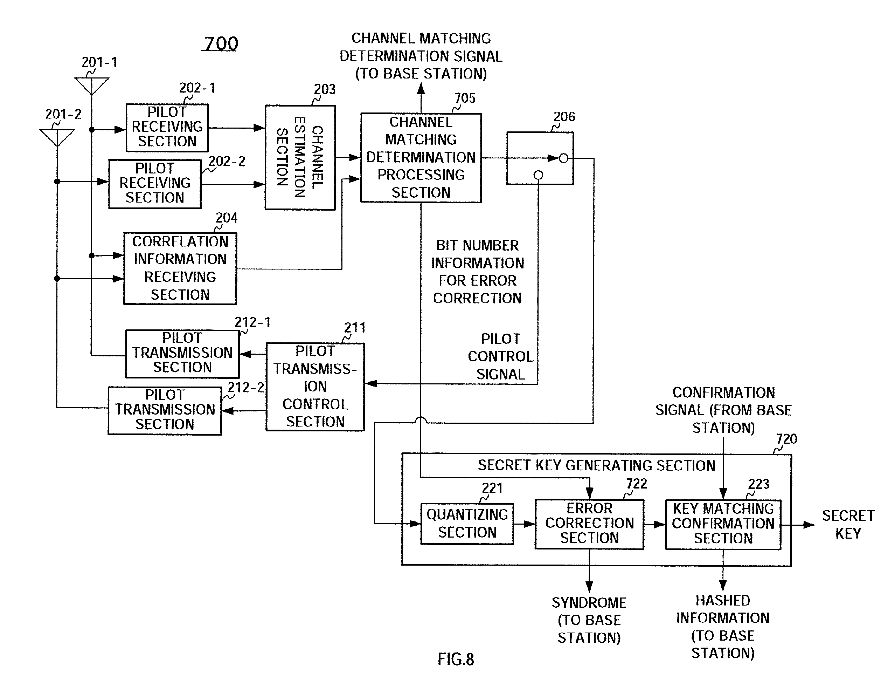

FIG.8 is a block diagram showing a configuration of the mobile station provided with wireless communication apparatus 700 according to this embodiment. Wireless communication apparatus 700 has channel matching determination processing section 705 in place of channel matching determination processing section 205 of wireless communication apparatus 200 according to Embodiment 1, and secret key generating section 720 in place of secret key generating section 220. Secret key generating section 720 has error correction section 722 in place of error correction section 222 at secret key generating section 220.

Channel matching determination processing section 705 then decides the number of bits of redundant data in the secret key generated by quantizing section 221 according to the magnitude of the calculated channel correlation value $\rho$ and reports the decided bit number information for the redundant data to error correction section 722.

Error correction section 722 carries out error correction assuming that the redundant data of the number of bits reported from channel matching determination processing section 705 is contained in the secret key inputted from quantizing section 221 and inputs the secret key after error correction to key matching confirmation section 223.

In this way, in this embodiment, channel matching determination section 605 and channel matching determination processing section 705 respectively adjust the number of bits of the redundant data used in error correction of the secret keys at error correction section 622 and error correction section 722 according to channel correlation value $\rho$ calculated by channel matching determination processing section 705. By adjusting the number of bits of the redundant data in the secret key, it is possible to adaptively select the optimum error correction capability for the propagation path environment expressed by channel correlation value p, so that it is possible to increase the probability that the secret key generated by the base station and the secret key generated by the mobile station match and promptly start encrypted communication between the base station and the mobile station.

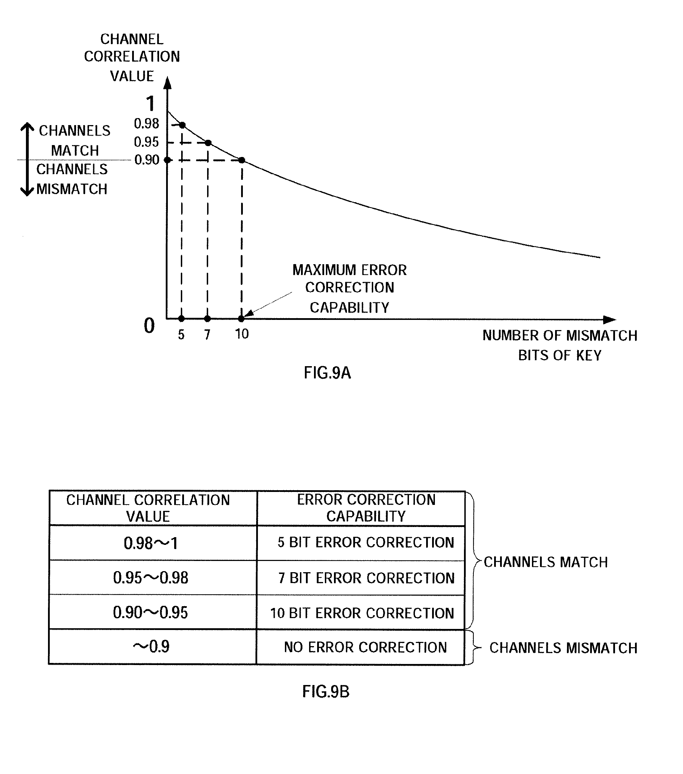

FIG.9A and FIG.9B show examples of correlation between channel correlation value $\rho$ calculated by channel matching determination processing section 705 and the number of bits that can be used as redundant data at error correction section 622 and error correction section 722. In the examples shown in FIG.9A and FIG.9B, only in the case where channel correlation value $\rho$ is 0.9 or more (error correction capability is 10 bits or less), it is determined that the secret key generated by the base station and the secret key generated by the mobile station finally match. Further, in the examples shown in FIG.9A and FIG.9B, error correction capability is changed according to channel correlation value p. For example, when channel correlation value $\rho$ is 0.98 or more, error correction is carried out on five bits, when 0.95 to 0.98, error correction is carried out on seven bits, and, when 0.9 to 0.95, error correction is carried out on ten bits .

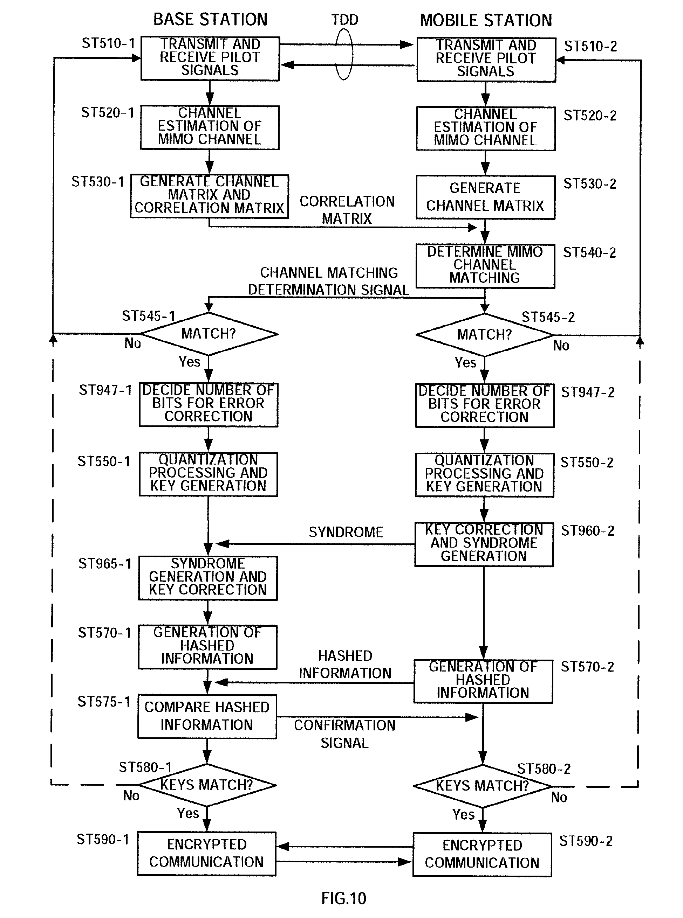

FIG.10 is a flowchart showing the operation of the base station and the mobile station configuring the wireless communication system according to this embodiment. Further, FIG.10 shows the operation newly adding step ST947 between step ST545 and step ST550, and in accompaniment with the addition of this step ST947, substituting step ST560-2 for step ST960-2, and step ST565-1 for step ST965-1 in FIG. 6 which shows the operation of the wireless communication system according to Embodiment 1.

In step ST947, channel matching determination section 605 of the base station and channel matching determination processing section 705 of the mobile station respectively decide the number of bits of redundant data used in error correction of the secret key according channel estimation value $\rho$ calculated by channel matching determination processing section 705.

Further, in step ST960-2, error correction section 722 of the mobile station performs error correction on the secret key assuming that the number of bits of the redundant data reported from channel matching determination processing section 705 is contained in the secret key inputted from quantizing section 221. In step ST960-2, a syndrome is generated based on the secret key after error correction, and the generated syndrome is radio transmitted to the base station.

Further, in step ST965-1, error correction section 622 of the base station decides the number of bits of the secret key inputted from quantizing section 121 for error correction taking into consideration the number of bits of the redundant data reported from channel matching determination section 605 and the syndrome transmitted from the mobile station, and performs error correction using the decided number of bits.

In this way, according to this embodiment, wireless communication apparatuses 600 and 700 intending to start encrypted communication in a wireless communication system using a MIMO technique performs error correction of a predetermined number of bits on the secret key upon generation of common secret keys, so that, even if correlation between channel estimation values calculated by these wireless communication apparatuses is low, it is possible to make the generated secret keys match, and thereby promptly start encrypted communication.

It is also possible to apply or modify the wireless communication apparatus according to the present invention as follows.

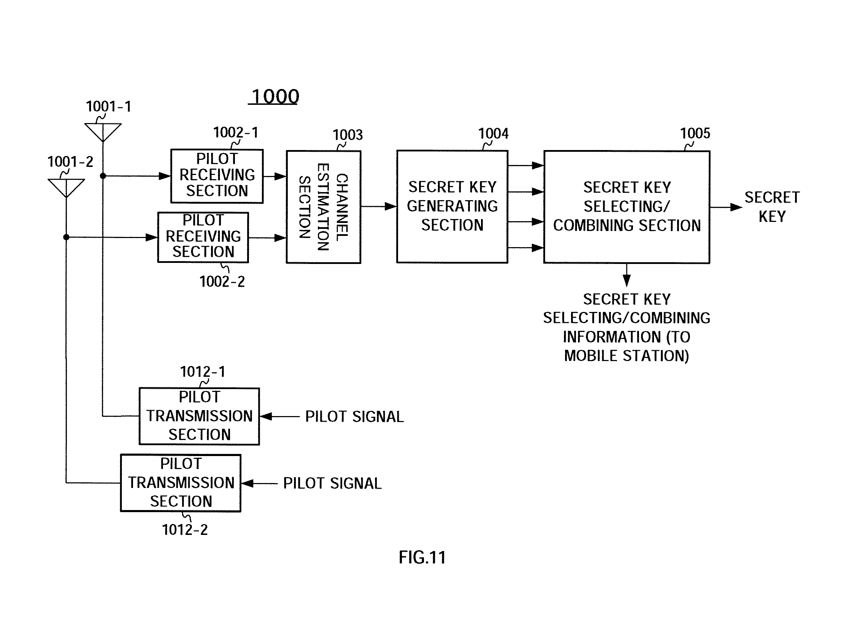

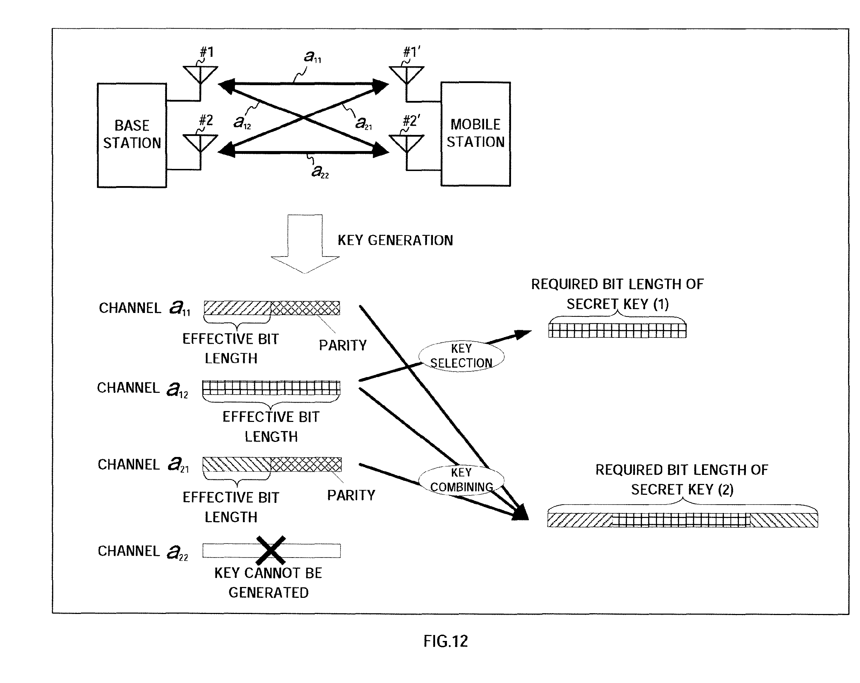

FIG. 11 is a block diagram showing a configuration of wireless communication apparatus 1000 implemented on the base station of the wireless communication system using the MIMO technique. The configuration of the mobile station is substantially the same as FIG.11, but is different from the base station in that the mobile station receives secret key selection combining information. The base station having wireless communication apparatus 1000 transmits and receives pilot signals with the mobile station provided with two antennas as shown in the upper part of FIG.12 via two antennas 1001-1 and 1001-2.

Wireless communication apparatus 1000 calculates channel estimation values individually for all channels of MIMO channels at channel estimation section 1003, and generates secret keys from all the channel estimation values calculated at secret key generating section 1004. Further, only secret keys of channels with good reception quality, for example, high signal-to-noise ratios (SNR) are selected out of all the secret keys generated at secret key selecting/ combining section 1005, or a plurality of secret keys after carrying out error correction of the number of bits of the redundant data adjusted according to the reception quality of the channels are combined to generate secret keys. Therefore, according to wireless communication apparatus 1000, it is possible to readily generate secret keys with high quality having small influence of noise and with a long data length.

FIG.12 shows a situation where secret keys are selected and combined using the example of a 2 x 2 MIMO system. Secret keys are generated from four channels of $a_{11}$ to $a_{22}$. However, in some channels, the effective key bit length may be short, or keys cannot be generated. Currently, a key generated by channel $a_{12}$ exists as a key satisfying required bit length (1) of a secret key, and is selected and used as a secret key. Further, a key satisfying the required bit length of secret key (2) does not exist, and keys generated by channel $a_{11}$, $a_{12}$ and $a_{21}$ are combined and used as a secret key.

In this way, in selection of a secret key, a key satisfying the required key bit length is selected out of secret keys generated from the channels. Further, when secret keys satisfying the required key bit length do not exist among keys generated from the channels, these secret keys are combined to generate a key of a long bit length so as to satisfy the requirement.

In the related art, only one secret key can be generated from a propagation path, so that, even if keys of the base station and the mobile station match, if this key does not satisfy the required bit length, a key have to be regenerated. However, if this kind of technique is used, it is possible to increase the probability of generating a key satisfying the required bit length through selection or combination of keys. It is therefore possible to promptly implement encrypted communication.

In the above-described embodiments, the case has been described as an example where the present invention is configured with hardware, but it is also possible to implement the present invention using software.

Furthermore, each function block used to explain the above-described embodiments is typically implemented as an LSI constituted by an integrated circuit. These may be individual chips or may partially or totally contained on a single chip. Here, each function block is described as an LSI, but this may also be referred to as "IC", "system LSI", "super LSI", "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor in which connections and settings of circuit cells within an LSI can be reconfigured is also possible.

Further, if integrated circuit technology comes out to replace LSI's as a result of the development of semiconductor technology or a derivative other technology, it is naturally also possible to carry out function block integration using this technology. Application in biotechnology is also possible.

A first aspect of the present invention is a wireless communication method for carrying out wireless communication using a first wireless communication apparatus having a plurality of first antennas and a second wireless communication apparatus having a plurality of second antennas, the wireless communication method having: a first channel estimation step of calculating at the first wireless communication apparatus a first channel estimation value for a first MIMO channel formed between the plurality of first antennas and the plurality of second antennas; a second channel estimation step of calculating at the second wireless communication apparatus a second channel estimation value for a second MIMO channel formed between the plurality of second antennas and the plurality of first antennas; an information generation step of generating at the first wireless communication apparatus first channel information from the calculated first channel estimation value; a channel matching determination step of determining at the second wireless communication apparatus whether or not the second MIMO channel and the first MIMO channel match based on the calculated second channel estimation value and the first channel information; a first secret key generating step of generating at the first wireless communication apparatus a first secret key from the first channel estimation value only when it is determined in the channel matching determination step that the channels match; and a second secret key generating step of generating at the second wireless communication apparatus a second secret key from the second channel estimation value only when it is determined in the channel matching determination step that the channels match.

A second aspect of the present invention is the wireless communication method in the above-described invention, wherein the first channel information in the information generation step is a correlation matrix of the first MIMO channel.

A third aspect of the present invention is the wireless communication method in the above-described invention, wherein: in the first secret key generating step, the first wireless communication apparatus generates the first secret key from the first channel estimation value only when it is determined in the channel matching determination step that the channels match, and decides a number of bits for error correction in the generated first secret key; and, in the second secret key generating step, the second wireless communication apparatus generates the second secret key from the second channel estimation value only when it is determined in the channel matching determination step that the channels match, and decides a number of bits for error correction in the generated second secret key.

A fourth aspect of the present invention is a wireless communication system provided with a first wireless communication apparatus having a plurality of first antennas and a second wireless communication apparatus having a plurality of second antennas, wherein: the first wireless communication apparatus has: a first channel estimation section that calculates a first channel estimation value for a first MIMO channel formed between the plurality of first antennas and the plurality of second antennas; a correlation matrix generating section that generates a correlation matrix of the first MIMO channel from the calculated first channel estimation value; and a first secret key generating section that generates a first secret key from the first channel estimation value only when it is determined that a second MIMO channel formed between the plurality of second antennas and the plurality of first antennas by the second wireless communication apparatus and the first MIMO channel match; and the second wireless communication apparatus has: a second channel estimation section that calculates a second channel estimation value for the second MIMO channel; a matching determination processing section that determines whether or not the second MIMO channel and the first MIMO channel match based on the calculated second channel estimation value and the correlation matrix of the first MIMO channel; and a second secret key generating section that generates a second secret key from the second channel estimation value only when it is determined by the matching determination processing section that the channels match.

A fifth aspect of the present invention is a wireless communication apparatus having: a plurality of first antennas that receive wireless signals of a first MIMO channel and transmits the wireless signals using a second MIMO channel; a first channel estimation section that calculates a first channel estimation value from the received signals of the first MIMO channel; a correlation matrix generating section that generates a correlation matrix of the first MIMO channel from the calculated first channel estimation value; a first secret key generating section that generates a first secret key from the first channel estimation value only when it is determined that the first MIMO channel and the second MIMO channel match based on the correlation matrix of the first MIMO channel.

A sixth aspect of the present invention is the wireless communication apparatus in the above-described invention, wherein the first secret key generating section generates the first secret key from the first channel estimation value only when it is determined that the first MIMO channel and the second MIMO channel match, and decides a number of bits for error correction in the generated first secret key, the wireless communication apparatus further having an error correction section that regards the number of bits for error correction decided by the first secret key generating section as an amount of redundant data and performs error correction on the first secret key.

A seventh aspect of the present invention is a wireless communication apparatus having: a plurality of second antennas that receive wireless signals of a second MIMO channel and transmit the wireless signals using a first MIMO channel; a second channel estimation section that calculates a second channel estimation value from the received signals of the secondMIMO channel; a matching determination processing section that determines whether or not the second MIMO channel and the first MIMO channel match based on a correlation matrix of the first MIMO channel received by the second MIMO channel; and a second secret key generating section that generates a second secret key from the second channel estimation value only when it is determined that the second MIMO channel and the first MIMO channel match.

An eighth aspect of the present invention is the wireless communication apparatus in the above-described invention, wherein the second secret key generating section generates the second secret key from the second channel estimation value only when it is determined that the second MIMO channel and the first MIMO channel match, and decides a number of bits for error correction in the generated second secret key, the wireless communication apparatus further having an error correction section that regards the number of bits for error correction decided by the second secret key generating section as an amount of redundant data and performs error correction on the second secret key.

The present application is based on Japanese Patent Application NO.2004-228661, filed on August 4, 2004, entire content of which is expressly incorporated by reference herein.

Industrial Applicability

The wireless communication apparatus according to the present invention provides an advantage of capable of reducing the time required for generating secret keys shared with a communicating party upon carrying out encrypted communication, and is useful in a wireless communication system using a MIMO technique.

**Claims**

1. A wireless communication method for carrying out wireless communication using a first wireless communication apparatus comprising a plurality of first antennas and a second wireless communication apparatus comprising a plurality of second antennas, the wireless communication method comprising:

   a first channel estimation step of calculating at the first wireless communication apparatus a first channel estimation value for a first MIMO channel formed between the plurality of first antennas and the plurality of second antennas;
   a second channel estimation step of calculating at the second wireless communication apparatus a second channel estimation value for a second MIMO channel formed between the plurality of second antennas and the plurality of first antennas;
   an information generation step of generating at the first wireless communication apparatus first channel information from the calculated first channel estimation value;
   a channel matching determination step of determining at the second wireless communication apparatus whether or not the second MIMO channel and the first MIMO channel match based on the calculated second channel estimation value and the first channel information;
   a first secret key generating step of generating at the first wireless communication apparatus a first secret key from the first channel estimation value only when it is determined in the channel matching determination step that the channels match; and
   a second secret key generating step of generating at the second wireless communication apparatus a second secret key from the second channel estimation value only when it is determined in the channel matching determination step that the channels match.

2. The wireless communication method according to claim 1, wherein the first channel information in the information generation step is a correlation matrix of the first MIMO channel.

3. The wireless communication method according to claim 1, wherein:

   in the first secret key generating step, the first wireless communication apparatus generates the first secret key from the first channel estimation value only when it is determined in the channel matching determination step that the channels match, and decides a number of bits for error correction in the generated first secret key; and
   in the second secret key generating step, the second wireless communication apparatus generates the second secret key from the second channel estimation value only when it is determined in the channel matching determination step that the channels match, and decides a number of bits for error correction in the generated second secret key.

4. A wireless communication system provided with a first wireless communication apparatus comprising a plurality of first antennas and a second wireless communication apparatus comprising a plurality of second antennas, wherein:

   the first wireless communication apparatus comprises:

a first channel estimation section that calculates a first channel estimation value for a first MIMO channel formed between the plurality of first antennas and the plurality of second antennas;

a correlation matrix generating section that generates a correlation matrix of the first MIMO channel from the calculated first channel estimation value; and

a first secret key generating section that generates a first secret key from the first channel estimation value only when it is determined that a second MIMO channel formed between the plurality of second antennas and the plurality of first antennas by the second wireless communication apparatus and the first MIMO channel match; and

the second wireless communication apparatus comprises:

a second channel estimation section that calculates a second channel estimation value for the second MIMO channel;

a matching determination processing section that determines whether or not the second MIMO channel and the first MIMO channel match based on the calculated second channel estimation value and the correlation matrix of the first MIMO channel; and

a second secret key generating section that generates a second secret key from the second channel estimation value only when it is determined by the matching determination processing section that the channels match.

5. A wireless communication apparatus comprising:

a plurality of first antennas that receive wireless signals of a first MIMO channel and transmit the wireless signals using a second MIMO channel;

a first channel estimation section that calculates a first channel estimation value from the received signals of the first MIMO channel;

a correlation matrix generating section that generates a correlation matrix of the first MIMO channel from the calculated first channel estimation value; and

a first secret key generating section that generates a first secret key from the first channel estimation value only when it is determined that the first MIMO channel and the second MIMO channel match based on the correlation matrix of the first MIMO channel.

6. The wireless communication apparatus according to claim 5, wherein:

the first secret key generating section generates the first secret key from the first channel estimation value only when it is determined that the first MIMO channel and the second MIMO channel match, and decides a number of bits for error correction in the generated first secret key; and

the wireless communication apparatus further comprises an error correction section that regards the number of bits for error correction decided by the first secret key generating section as an amount of redundant data and performs error correction on the first secret key.

7. A wireless communication apparatus comprising:

a plurality of second antennas that receive wireless signals of a second MIMO channel and transmit the wireless signals using a first MIMO channel;

a second channel estimation section that calculates a second channel estimation value from the received signals of the second MIMO channel;

a matching determination processing section that determines whether or not the second MIMO channel and the first MIMO channel match based on a correlation matrix of the first MIMO channel received by the second MIMO channel; and

a second secret key generating section that generates a second secret key from the second channel estimation value only when it is determined that the second MIMO channel and the first MIMO channel match.

8. The wireless communication apparatus according to claim 7, wherein:

the second secret key generating section generates the second secret key from the second channel estimation value only when it is determined that the second MIMO channel and the first MIMO channel match, and decides a number of bits for error correction in the generated second secret key; and

the wireless communication apparatus further comprises an error correction section that regards the number of bits for error correction decided by the second secret key generating section as an amount of redundant data and performs error correction on the second secret key.

FIG.1

**FIG.2**

100

101-1 — PILOT RECEIVING SECTION (102-1)

101-2 — PILOT RECEIVING SECTION (102-2)

CHANNEL ESTIMATION SECTION (103)

CHANNEL MATCHING DETERMINATION SECTION (105)

CHANNEL MATCHING DETERMINATION SIGNAL (FROM MOBILE STATION)

106

CORRELATION INFORMATION CALCULATING SECTION (108)

CORRELATION INFORMATION TRANSMISSION SECTION (109)

PILOT TRANSMISSION CONTROL SECTION (111)

PILOT CONTROL SIGNAL

PILOT TRANSMISSION SECTION (112-1)

PILOT TRANSMISSION SECTION (112-2)

SECRET KEY GENERATING SECTION (120)

QUANTIZING SECTION (121)

ERROR CORRECTION SECTION (122)

KEY MATCHING CONFIRMATION SECTION (123)

SYNDROME (FROM MOBILE STATION)

HASHED INFORMATION (FROM MOBILE STATION)

CONFIRMATION SIGNAL (TO MOBILE STATION)

SECRET KEY

FIG.3

FIG.4

CHANNEL
CORRELATION
VALUE

1

CHANNELS MATCH

CHANNELS MISMATCH

0

NUMBER OF MISMATCH
BITS OF KEY

ERROR CORRECTION CAPABILITY FOR
MISMATCH KEY CORRECTION

FIG.5

EP 1 764 946 A1

BASE STATION    TDD    MOBILE STATION

ST510-1 **TRANSMIT AND RECEIVE PILOT SIGNALS**    **TRANSMIT AND RECEIVE PILOT SIGNALS** ST510-2

ST520-1 **CHANNEL ESTIMATION OF MIMO CHANNEL**    **CHANNEL ESTIMATION OF MIMO CHANNEL** ST520-2

ST530-1 **GENERATE CHANNEL MATRIX AND CORRELATION MATRIX**    CORRELATION MATRIX    **GENERATE CHANNEL MATRIX** ST530-2

**DETERMINE MIMO CHANNEL MATCHING** ST540-2

CHANNEL MATCHING DETERMINATION SIGNAL

ST545-1 **MATCH?** No Yes    ST545-2 **MATCH?** No Yes

ST550-1 **QUANTIZATION PROCESSING AND KEY GENERATION**    **QUANTIZATION PROCESSING AND KEY GENERATION** ST550-2

SYNDROME    **GENERATE SYNDROME** ST560-2

ST565-1 **SYNDROME GENERATION AND KEY CORRECTION**

ST570-1 **GENERATION OF HASHED INFORMATION**    HASHED INFORMATION    **GENERATION OF HASHED INFORMATION** ST570-2

ST575-1 **COMPARE HASHED INFORMATION**    CONFIRMATION SIGNAL

ST580-1 **KEYS MATCH?** No Yes    ST580-2 **KEYS MATCH?** No Yes

ST590-1 **ENCRYPTED COMMUNICATION**    **ENCRYPTED COMMUNICATION** ST590-2

FIG.6

22

FIG.7

EP 1 764 946 A1

EP 1 764 946 A1

**700**

FIG.8

CHANNEL
CORRELATION
VALUE

FIG.9A

| CHANNEL CORRELATION VALUE | ERROR CORRECTION CAPABILITY | |
|---|---|---|
| 0.98~1 | 5 BIT ERROR CORRECTION | CHANNELS MATCH |
| 0.95~0.98 | 7 BIT ERROR CORRECTION | |
| 0.90~0.95 | 10 BIT ERROR CORRECTION | |
| ~0.9 | NO ERROR CORRECTION | CHANNELS MISMATCH |

FIG.9B

BASE STATION — TDD — MOBILE STATION

ST510-1 TRANSMIT AND RECEIVE PILOT SIGNALS → TRANSMIT AND RECEIVE PILOT SIGNALS ST510-2

ST520-1 CHANNEL ESTIMATION OF MIMO CHANNEL — CHANNEL ESTIMATION OF MIMO CHANNEL ST520-2

ST530-1 GENERATE CHANNEL MATRIX AND CORRELATION MATRIX — CORRELATION MATRIX — GENERATE CHANNEL MATRIX ST530-2

DETERMINE MIMO CHANNEL MATCHING ST540-2

CHANNEL MATCHING DETERMINATION SIGNAL

ST545-1 MATCH? No / Yes        ST545-2 MATCH? No / Yes

ST947-1 DECIDE NUMBER OF BITS FOR ERROR CORRECTION — DECIDE NUMBER OF BITS FOR ERROR CORRECTION ST947-2

ST550-1 QUANTIZATION PROCESSING AND KEY GENERATION — QUANTIZATION PROCESSING AND KEY GENERATION ST550-2

SYNDROME — KEY CORRECTION AND SYNDROME GENERATION ST960-2

ST965-1 SYNDROME GENERATION AND KEY CORRECTION

ST570-1 GENERATION OF HASHED INFORMATION — HASHED INFORMATION — GENERATION OF HASHED INFORMATION ST570-2

ST575-1 COMPARE HASHED INFORMATION — CONFIRMATION SIGNAL

ST580-1 KEYS MATCH? No / Yes        ST580-2 KEYS MATCH? No / Yes

ST590-1 ENCRYPTED COMMUNICATION ⇄ ENCRYPTED COMMUNICATION ST590-2

FIG.10

FIG.11

EP 1 764 946 A1

FIG.12

101-1

$a_{11}$

201-1

BASE STATION

101-2

$a_{12}$

$a_{21}$

201-2

MOBILE STATION

$a_{22}$

FIG.13

## INTERNATIONAL SEARCH REPORT

| International application No. |
| --- |
| PCT/JP2005/013979 |

A.   CLASSIFICATION OF SUBJECT MATTER
     *H04L9/08* (2006.01), *H04Q7/38* (2006.01)

According to International Patent Classification (IPC) or to both national classification and IPC

B.   FIELDS SEARCHED

Minimum documentation searched (classification system followed by classification symbols)
     *H04L9/08* (2006.01), *H04Q7/38* (2006.01)

Documentation searched other than minimum documentation to the extent that such documents are included in the fields searched
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| A | John E. Hershey, Amer A. Hassan and Rao Yarlagadda, Unconventional Cryptographic Keying Variable Management, IEEE TRANSACTIONS ON COMMUNICATIONS, 1995.01, Vol.43, No.1, pages 3 to 6 | 1-8 |
| A | JP 2003-258771 A  (Shuichi SASAOKA), 12 September, 2003 (12.09.03), Full text; Figs. 1 to 7 (Family: none) | 1-8 |
| A | JP 2004-187197 A  (Doshisha University), 02 July, 2004 (02.07.04), Full text; Figs. 1 to 14 (Family: none) | 1-8 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 14 October, 2005 (14.10.05) | 01 November, 2005 (01.11.05) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2005/013979 |

C (Continuation).   DOCUMENTS CONSIDERED TO BE RELEVANT

| Category* | Citation of document, with indication, where appropriate, of the relevant passages | Relevant to claim No. |
| --- | --- | --- |
| T,A | Akito KITAURA, Shuichi SASAOKA, "Rikujo Ido Tsushin ni okeru OFDM no Densoro Tokusei ni Motozuku Himitsu Kagi Kyoyu Hoshiki", The IEICE Transactions on Fundamentals of Electronics, Communications and Computer Sciences, 01 October, 2004 (01.10.04), The Institute of Electronics, Information and Communication Engineers, Engineering Sciences Society, Vol.J87-A, No.10, pages 1320 to 1328 | 1-8 |
| T,A | Yoshihiko OGAWA, Shuichi SASAOKA, Tomohiro IMAI, Yasuaki YUDA, Ken'ichi MIYOSHI, Koichi HONMA, "MIMO-OFDM System ni okeru Sokan Gyoretsu no Koyuchi Hendo ni Motozuku Himitsu Kagi Kyoyu Hoshiki no Kento", The Institute of Electronics, Information and Communication Engineers Gijutsu Kenkyu Hokoku RCS 2004-236 to 258, 19 January, 2005 (19.01.05), The Institute of Electronics, Information and Communication Engineers, Vol.104, No.597, pages 127 to 132 | 1-8 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004228661 A